# EUROPEAN PATENT SPECIFICATION

(11) **EP 0 375 254 B1**
(45) Date of publication and mention of the grant of the patent: **16.03.1994**
(21) Application number: 89312979.1
(22) Date of filing: 12.12.1989
(51) Int. Cl.: H01M 4/58, C01B 19/00

(54) **Rechargeable non-aqueous cell**
Wiederaufladbare nichtwässrige Zelle
Cellule non aqueuse rechargeable

(30) Priority: 19.12.1988 US 286433
(43) Date of publication of application: 27.06.1990
(73) Proprietor: AT&T Corp., New York, NY 10013-2412 (US)
(72) Inventor: Ter Haar, Leonard William, Berkeley Heights New Jersey 07922 (US); Trumbore, Forrest Allen, Summit New Jersey 07901 (US)
(74) Representative: Johnston, Kenneth Graham

(56) References cited:
- EP-A- 0 368 448
- US-A- 3 864 167
- US-A- 4 035 555
- US-A- 4 086 403
- RUSSIAN J. INORGANIC MAT., no. 20, 1984, pages 935-939; V.E. FEDOROV et al.: "Interaction in the Nb-Se system"
- IDEM
- PROCEEDINGS OF THE SYMPOSIUM ON PRIMARY AND SECONDARY AMBIENT TEMPERATURE LITHIUM BATTERIES, Honolulu, 18th - 23rd October 1987, pages 565-573, Pennington, NJ, US; B.V. RATNAKUMAR et al.: "Studies on niobium triselenide cathode material for lithium rechargeable cells"
- JOURNAL OF THE ELECTROCHEMICAL SOCIETY, vol. 123, no. 7, July 1976, pages 960-963; D.W. MURPHY et al.: "The chemistry of TiS3 and NbSe3 cathodes"
- JOURNAL OF THE ELECTROCHEMICAL SOCIETY, vol. 124, no. 3, March 1977, pages 325-329; D.W. MURPHY et al.: "A new niobium selenide cathode for nonaqueous lithium batteries"
- SOLID STATE IONICS, vol. 11, no. 3, November 1983, pages 195-201, Amsterdam, NL; Y. ONUKI et al.: "Electrochemical characteristics of transition metal trichalcogenides in the secondary lithium battery"

## Description

### Technical Field

The invention is a process for making a nonaqueous cell. In particular, the procedure involves an advantageous procedure for making a non-aqueous cell.

### Background of the Invention

Battery technology has undergone considerable change in recent years in response to demands for higher reliability, greater capacity per unit weight or volume, longer shelf life and greater cycle life. This has been due to market demands for more portable equipment (e.g., telephones, tools, computers, etc.) as well as back-up power sources for a variety of devices including memories and other components associated with computers.

A particularly attractive type battery for many applications is a non-aqueous battery, especially those featuring lithium as the active material in the negative electrode. Such battery cells feature very high cell potential and low weight density and result in cells of high energy density (see, for example, High Energy Batteries, by R. Jasinski, Plenum Press, New York, 1967, pp. 140-144).

Exceptionally good active materials for the positive electrode of lithium non-aqueous batteries are niobium diselenide, niobium triselenide, and niobium trisulfide (see for example, U.S. Patent No. 3,864,167 issued on February 4, 1975 to J. Broadhead et al, incorporated herein by reference). These electrode materials not only have high energy density, good charge and discharge characteristics (cycle performance) and good stability, but also are compatible with a large variety of electrolyte systems. Tests carried out on lithium cells made with these positive electrode materials (especially with niobium triselenide) confirm the advantages outlined above.

Electrodes comprising NbSe₃ can be fabricated by providing a thin Nb foil and reacting it with Se vapor. The resulting fibrous sheet of NbSe₃ is then rolled onto a metal grid that serves as current collector. The above process has several shortcomings, including relatively high materials cost, and relatively long reaction time. Furthermore, it is generally difficult to produce thin sheets of active material of uniform thickness and morphology by means of the prior art technique. Another procedure involves reacting niobium powder with chalcogen vapor under conditions where the desired niobium chalcogen is formed. For niobium triselenide, the conditions involve heating the niobium powder in the presence of selenium to a temperature of about 625-680°C. Often, a two stage heating process is preferred; first heating to about 580°C for about 15 hours and then heating to about 680°C for 15 hours. (See for example, EP-A2-0368448 This is a document within the meaning of Art. 54(3)EPC (Wei-Chou Fang and Brijesh Vyas) filed September 14, 1988 with Serial Number 244,218). Niobium-selenium compounds are discussed in a paper by V.E. Fedorov et al., Russian Inorganic Materials 20, 935 (1984).

In order to increase the commercial value of using chalcogenides such as NbSe₃ as the active positive electrode material in non-aqueous cells, it is desirable to reduce the cost of fabricating cells with chalcogen active material and to make the fabrication procedure more easily adaptable to mass production. In particular, it is desirable to find a synthesis procedure for NbSe₃ active electrode material that is less expensive, that can be used to produce thin sheets of active material of uniform thickness, and that is less cumbersome and/or more easily adapted to mass production under manufacturing conditions than those known to the prior art.

According to the present invention, there is provided a process as defined in claim 1.

In the preferred embodiment of the invention is a process for making a nonaqueous cell comprising positive electrode, electrolyte and negative electrode in which the active material in the positive electrode comprises niobium triselenide and the niobium triselenide is made by heating Nb₂Se₉ to a temperature where it is substantially converted to to NbSe₃ typically between 625°C and 780°C. Preferred is a temperature range from 630°C to 690°C with 650°C to 680°C most preferred. Generally, the time of reaction may vary over large limits, including from about one minute to about 25 hours. Shorter reaction times are advantageous. Use of higher temperatures shortens reaction times. Removal of selenium (e.g. by venting to the atmosphere or use of a cold region on the closed reaction tube) also shortens reaction times and often permits use of a lower temperature range in the formation of NbSe₃. Also, use of fine powders of Nb₂Se₉ shortens reaction times. Reaction times as short as 10 minutes to 4 hours are achieved.

At higher temperatures (e.g., 680°C to 780°C) in closed containers, caution should be used because of selenium overpressure.

A typical procedure typically preferred for making lithium cells involves deposition of a fine powder of Nb₂Se₉ onto a substrate and then conversion of the Nb₂Se₉ to niobium triselenide by heating in a sealed quartz tube. Often, a uniform thin layer of niobium triselenide is desired and this is conveniently done by making a slurry of Nb₂Se₉ powder, depositing the well-mixed slurry onto the substrate (e.g. by dipping, spraying, etc.), removing the liquid, for example by evaporation and then carrying out the reaction to form the niobium triselenide. The niobium triselenide obtained in this way is in the form of fibrous sheets which is highly advantageous for battery applications. Also, the reaction time can be made very short by suitable choice of temperature, bulk of Nb₂Se₉ being decomposed and pressure of selenium. The niobium triselenide formed in this way can be used as is in a battery after removal from the substrate.

In some applications, the niobium triselenide is removed from the inert substrate, rolled onto a metal mesh (e.g., a nickel mesh) and shaped for use in a cylindrical lithium cell. The procedure is rapid, easily adapted for mass production and can be carried with a minimum of operator attention. The resulting positive electrode exhibits excellent electrochemical characteristics including high capacity per unit weight, good recycling characteristics and excellent reliability.

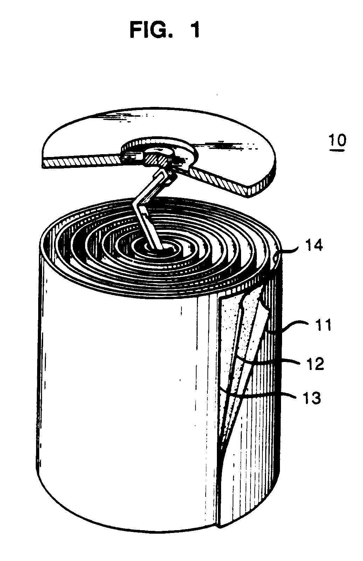

### Brief Description of the Drawing

The Figure shows a schematic diagram of the relevant parts of an exemplary rolled nonaqueous cylindrical cell made in accordance with the embodiment.

### Detailed Description

The invention is based on the discovery that niobium triselenide suitable for use in the positive electrode of nonaqueous cells can be produced rapidly and reliably from Nb₂Se₉ (diniobium nonaselenide). The process for forming the niobium triselenide involves heating the Nb₂Se₉ to a temperature where Nb₂Se₉ loses selenium to form NbSe₃. Generally, this can be done over a wide temperature range (probably as low as 625°C if selenium pressure is reduced) but not over about 780°C because NbSe₃ is unstable above that temperature, forming NbSe₂ and selenium.

In currently preferred embodiments of the invention, powder Nb₂Se₉ is deposited as a more or less uniform layer on a substrate before reaction to NbSe₃. This uniform layer may be obtained by making a slurry of powdered Nb₂Se₉, insuring uniformity of the slurry by stirring or other means and depositing the slurry on a substrate. The liquid is then removed from the deposited slurry generally by some evaporation procedure (heating, vacuum drying, etc.). After drying, the reaction is carried out typically by heating to about 680°C to 720°C for 6 to 15 hours. Six hours is generally needed to insure complete reaction although shorter times are often sufficient, particularly at high temperatures. The reaction is generally complete at 15 hours but longer times are not detrimental.

The slurry may be deposited on the substrate in a variety of ways including dipping, spraying, etc., and the liquid is generally removed by heating. An advantage of this procedure is the ease and reliability of obtaining uniform layers of Nb₂Se₉ which results in uniform layers of NbSe₃. Also, this procedure results in good adherence of the powdered Nb₂Se₉ to the substrate, an advantage during commercial manufacture.

Various substrate materials may be used including materials to be incorporated into the finished cell (such as a metal current collector, e.g. aluminum) as well as inert substrates such as alumina and quartz glass.

The slurry composition may vary over large limits. The liquid should be chemically inert to the Nb₂Se₉ powder and the substrate. It should have reasonable viscosity so the slurry suspension does not separate too fast and should have a reasonable boiling point (e.g., less than about 200°C) to facilitate removal. Propylene carbonate is quite suitable and is currently preferred but other liquids (glycerol, various oils, etc.) are also useful. Various other liquids may be useful as may occur to those skilled in this art. The concentration of powdered Nb₂Se₉ may also vary over large limits, typically from 10 to 90 weight percent Nb₂Se₉, with 30 to 70 weight percent Nb₂Se₉ preferred. Particle size of the powder may also vary over large limits but mesh size less than about 325 is currently preferred because of adherence of powder to substrate and more rapid reaction to form the NbSe₃.

The Nb₂Se₉ may be made in a variety of ways well known in the art. A typical procedure, preferred at the present time is to react stoichiometric amounts of Nb and Se in a closed vessel (such as a quartz tube) in the temperature range from 450°C to 680°C for about 12 hours. A preferred temperature range is from 560°C to 600°C.

The cell fabrication may be completed in a variety of ways well known in the battery art. Both large and small cells can be made with a variety of electrolytes and separator materials. Various shapes and cell structure are useful. Particularly attractive are rolled cylindrical cells such as those described in U. S. Patent 4,740,433 issued to W. P.Lu on April 26, 1988 and U. S. Patent 4,753,859 issued to L. E. Brand on June 28, 1988. These patents describe both separator material and electrolyte systems useful in the practice of the invention and are incorporated herein by reference.

Relevant parts of a useful rolled cylindrical cell 10 are shown schematically in the Figure. The cell comprises four layers rolled into a cylindrical shape. The four layers are a negative lithium electrode 11, a separator 12, a positive electrode 13, and another separator layer 14. The active material in the positive electrode is advantageously manufactured in accordance with the instant invention. The four-layer roll is generally put into a cylindrical container with suitable electrical connections to the positive and negative electrodes, respectively. The container is filled with an appropriate electrolyte to permit electrochemical action. These parts can be conventional and are not shown.

## Claims

1. A process of making a nonaqueous cell comprising a negative electrode, a separator, a positive electrode, and an electrolyte, said positive electrode comprising niobium triselenide, said process including the step of assembling the negative electrode, separator, positive electrode and electrolyte to form a nonaqueous cell, CHARACTERIZED IN THAT the positive electrode is made by a procedure that comprises the steps of depositing on a substrate a liquid slurry comprising from 10 to 90 weight percent of Nb₂Se₉ powder, removing the liquid from the deposited slurry to form a dry coating of Nb₂Se₉ powder thereon, and heating the substrate with the said dry coating thereon at a temperature within a range of from 625 to 780°C and for a period of time ranging from one minute to 25 hours, said temperature and period of time being sufficient to form a layer of fibrous material comprising NbSe₃; and using the so-formed fibrous material as the positive electrode.

2. The process of claim 1, in which the temperature range is from 630°C to 690°C.

3. The process of claim 2, in which the temperature range is from 650°C to 680°C.

4. The process of claim 1, in which the period of time ranges from 10 minutes to 4 hours.

5. The process of claim 1, in which the temperature range is from 680 to 720°C and the period of time ranges from 6 to 15 hours.

6. The process of claim 1, wherein the liquid slurry is deposited by spraying and wherein the liquid is removed by a procedure that comprises heating of the substrate with the slurry thereon, said slurry containing from 30 to 70 weight percent of Nb₂Se₉.

7. The process of any one of preceding claims 1 to 6, wherein the substrate comprises a material selected from alumina, quartz and aluminum.

8. The process of any one of preceding claims 1 to 7, wherein the liquid in the slurry comprises propylene carbonate.

9. The process of any one of preceding claims 1 to 8, wherein the Nb₂Se₉ powder has particle size finer than about mesh 325.

10. The process of any one of preceding claims 1 to 9, in which the Nb₂Se₉ is made by reacting niobium with selenium in the temperature range of from 450°C to 620°C.

## Patentansprüche

1. Verfahren zur Herstellung einer nichtwäßrigen Zelle mit einer negativen Elektrode, einem Separator, einer positiven Elektrode und einem Elektrolyten, wobei die positive Elektrode Niobtriselenid umfaßt und das Verfahren den Schritt enthält, die negative Elektrode, den Separator, die positive Elektrode und den Elektrolyten zur Bildung einer nichtwäßrigen Zelle zusammenzubauen,
dadurch gekennzeichnet,
daß die positive Elektrode durch ein Verfahren mit den Schritten hergestellt wird:
Abscheiden einer flüssigen Aufschlämmung auf ein Substrat, die zwischen 10 und 90 Gew.% Nb₂Se₉-Pulver enthält,
Entfernen der Flüssigkeit aus der abgeschiedenen Aufschlämmung unter Bildung einer trockenen Beschichtung von Nb₂Se₉-Pulver auf dem Substrat,
Erhitzen des Substrats mit der trockenen Beschichtung auf eine Temperatur im Bereich von 625 bis 780°C für eine Zeitdauer zwischen 1 Minute und 25 Stunden, wobei die Temperatur und die Zeitdauer ausreichen, um eine Schicht aus faserigem, NbSe₃ umfassendem Material zu bilden, und
Verwenden des so gebildeten faserigen Materials als positive Elektrode.

2. Verfahren nach Anspruch 1,
bei dem der Temperaturbereich zwischen 630 und 690°C liegt.

3. Verfahren nach Anspruch 2,
bei dem der Temperaturbereich zwischen 650 und 680°C liegt.

4. Verfahren nach Anspruch 1,
bei dem die Zeitdauer zwischen 10 Minuten und 4 Stunden liegt.

5. Verfahren nach Anspruch 1,
bei dem der Temperaturbereich zwischen 680 und 720°C und die Zeitdauer zwischen 6 und 15 Stunden liegt.

6. Verfahren nach Anspruch 1,
bei dem die flüssige Aufschlämmung durch Sprühen abgeschieden wird und die Flüssigkeit durch ein Verfahren entfernt wird, das das Erhitzen des Substrats mit der aufgebrachten Aufschlämmung umfaßt, wobei die Aufschlämmung zwischen 30 und 70 Gew.% Nb₂Se₉ enthält.

7. Verfahren nach einem der Ansprüche 1 bis 6,
bei dem das Substrat ein Material umfaßt, das aus Aluminiumoxid, Quarz und Aluminium gewählt ist.

8. Verfahren nach einem der Ansprüche 1 bis 7,
bei dem die Flüssigkeit in der Aufschlämmung Propylencarbonat umfaßt.

9. Verfahren nach einem der Ansprüche 1 bis 8,
bei dem das Nb₂Se₉-Pulver eine Partikelgröße feiner als die Siebgröße 325 aufweist.

10. Verfahren nach einem der Ansprüche 1 bis 9,
bei dem das Nb₂Se₉ durch Reagieren von Niob mit Selen im Temperaturbereich von 450 bis 620°C hergestellt wird.

## Revendications

1. Un procédé de fabrication d'un accumulateur non aqueux comprenant une électrode négative, un séparateur, une électrode positive et un électrolyte, l'électrode positive comprenant du triséléniure de niobium, ce procédé comprenant l'étape qui consiste à assembler l'électrode négative, le séparateur, l'électrode positive et l'électrolyte pour former un accumulateur non aqueux, CARACTERISE EN CE QUE l'électrode positive est formée par une procédure qui comprend les étapes suivantes : on dépose sur un substrat une suspension liquide comprenant de 10 à 90% en masse de poudre de Nb₂Se₉, on élimine le liquide de la suspension déposée pour former un revêtement sec de poudre de Nb₂Se₉ sur le substrat, et on chauffe le substrat portant le revêtement sec, à une température comprise dans une plage allant de 625 à 780°C, et pendant une durée allant d'une minute à 25 heures, cette température et cette durée étant suffisantes pour former une couche de matériau fibreux consistant en Nb₂Se₉; et on utilise pour l'électrode positive le matériau fibreux qui est ainsi formé.

2. Le procédé de la revendication 1, dans lequel la plage de température va de 630°C à 690°C.

3. Le procédé de la revendication 2, dans lequel la plage de température va de 650°C à 680°C.

4. Le procédé de la revendication 1, dans lequel la durée est comprise entre 10 minutes et 4 heures.

5. Le procédé de la revendication 1, dans lequel la plage de température va de 680 à 720°C et la durée est comprise entre 6 et 15 heures.

6. Le procédé de la revendication 1, dans lequel la suspension liquide est déposée par pulvérisation, et dans lequel le liquide est éliminé par une procédure qui comprend le chauffage du substrat sur lequel se trouve la suspension, cette suspension contenant de 30 à 70% en masse de Nb₂Se₉.

7. Le procédé de l'une quelconque des revendications 1 à 6 précédentes, dans lequel le substrat consiste en un matériau sélectionné parmi l'alumine, le quartz et l'aluminium.

8. Le procédé de l'une quelconque des revendication 1 à 7 précédentes, dans lequel le liquide dans la suspension consiste en carbonate de propylène.

9. Le procédé de l'une quelconque des revendications 1 à 8 précédentes, dans lequel la poudre de Nb₂Se₉ a une taille de particules correspondant au passage à travers un tamis ayant une ouverture de maille d'environ 0,044 mm.

10. Le procédé de l'une quelconque des revendications 1 à 9 précédentes, dans lequel on forme le Nb₂Se₉ en faisant réagir du niobium avec du sélénium dans la plage de température de 450°C à 620°C.
